# EUROPÄISCHE PATENTSCHRIFT

(11) **EP 3 453 625 B1**
(45) Veröffentlichungstag und Bekanntmachung des Hinweises auf die Patenterteilung: **27.01.2021**
(21) Anmeldenummer: 18193098.3
(22) Anmeldetag: 07.09.2018
(51) Int. Cl.: B65B 7/28, B65G 59/06

(54) **VORRICHTUNG ZUR ZUFÜHRUNG VON DECKELN ZU EINEM DOSENVERSCHLIESSER**
DEVICE FOR SUPPLYING LIDS TO A MACHINE FOR CLOSING CANS
DISPOSITIF D'AMENÉE DE COUVERCLES À UNE SERTISSEUSE DE BOÎTES

(30) Priorität: 07.09.2017 DE 102017120703
(43) Veröffentlichungstag der Anmeldung: 13.03.2019
(73) Patentinhaber: KRONES AG, 93073 Neutraubling (DE)
(72) Erfinder: Langwieser, Sebastian, 93073 Neutraubling (DE); Trummet, Michael, 93073 Neutraubling (DE)
(74) Vertreter: Nordmeyer, Philipp Werner

(56) Entgegenhaltungen:
- DE-A1- 2 021 091
- DE-A1- 2 550 141
- DE-A1- 2 754 736
- DE-B- 1 105 788
- GB-A- 673 476
- US-A1- 2007 056 251
- US-A1- 2016 264 269

## Beschreibung

### Technisches Gebiet

Die vorliegende Erfindung betrifft eine Vorrichtung zur Zuführung von Deckeln zu einem Dosenverschließer.

### Stand der Technik

Dosen für Getränke, Dosen für Lebensmittelkonserven oder Dosen für Non-Food Waren erfreuen sich großer Beliebtheit, da Dosen eine ideale Verpackung für diverse Produkte darstellen. So sind Dosen unzerbrechlich, weisen ein geringes Gewicht auf, sind kostengünstig, leicht zu recyceln und absolut licht- und sauerstoffundurchlässig.

Vor dem Befüllen von Dosen liegen die Dosen zunächst zweiteilig vor, d.h. in Form von Leerdosen, welche die Wandung der Dose und den Dosenboden umfassen, und in Form von Deckeln, welche meist als Aufreißdeckel ausgestaltet sind und erst nach dem Befüllen mit der Dose zu einer gas- und flüssigkeitsdichten Verpackung verbunden werden.

Das Befüllen von Dosen erfolgt in einer Dosenabfüllanlage, wobei der Füllvorgang in einem Füllerkarussell stattfindet und der Verschließvorgang der befüllten Dosen mit den Dosendeckeln in einem dem Füllerkarussell nachgelagerten Verschließer. Hierbei werden die befüllten Dosen nach dem Füllvorgang in dem Füllerkarussell zunächst ohne Verschluss, d.h. ohne Deckel, transportiert. Anschließend an die Befüllung wird mittels eines Dosenverschließers jeweils ein Deckel auf jede befüllte Dose aufgesetzt. In dem Dosenverschließer werden die aufgelegten Dosendeckel dann mittels eines Verschließkopfes und einer Verschließerrolle mit den befüllten Dosen verbunden, d.h. gefalzt.

Die entsprechenden Dosendeckel werden dabei über eine externe Deckelzuführung zugeführt. Am Ende der Deckelzuführung befindet sich eine Abstapelschnecke mit einem Haltemesser. Die Abstapelschnecke trennt und vereinzelt die Deckel mithilfe einer spiralartigen Nut aus dem Stapel.

Das Haltemesser ist derart positioniert, dass es sich knapp oberhalb der Abstapelschnecke befindet, wobei das Haltemesser die Deckel bei einer Produktionsunterbrechung zurückhält und bei einem Produktionsstart freigibt.

Bei bekannten Dosenverschließern wird die Abstapelschnecke über den Antrieb der nachfolgenden Transport- und/oder Behandlungseinrichtung angetrieben, d.h. die Abstapelschnecke dreht sich zwangsweise synchron mit der nachfolgenden Transport- und/oder Behandlungseinrichtung. Kommt es nun zu einer Produktionsunterbrechung, so dass keine Deckel durch die Abstapelschnecke bereitgestellt werden müssen, wird das Haltemesser ausgefahren, welches die in der Deckelzuführung gespeicherten Deckel zurückhält. Durch die Position dieses Haltemessers werden dann trotz der sich weiter drehenden Abstapelschnecke keine weiteren Deckel gefördert. Sollen wieder Deckel zugeführt werden, wird das Haltemesser zurückgefahren und die Abstapelschnecke fördert wieder Deckel.

Die US 2016/0264269 A1 beschreibt eine Einrichtung zum Trennen von Deckeln. Die DE 1 105 788 B beschreibt eine Vorrichtung zur Entnahme von Deckeln bei vollautomatischen Verschließmaschinen. Die DE 27 54 736 A1 beschreibt eine Vorrichtung zur Anbringung von Endverschlusselementen an eine Folge von Behälterrümpfen. Die DE 2 021 091 A1 beschreibt eine regelbare Zufuhrvorrichtung zum Heranbringen von Deckeln in Behälterschließmaschinen. Die GB 673,476 A beschreibt eine Vorrichtung zum Zuführen von Behälterdeckeln. Die DE 25 50 141 A1 beschreibt eine Vorrichtung zum Aufsetzen von Deckeln auf Eimer, Dosen oder ähnliche Behälter. Die US 2007/0056251 A1 beschreibt ein Verfahren und eine Vorrichtung zum Spülen eines Behälters mit einem Inertgas.

### Darstellung der Erfindung

Ausgehend von dem bekannten Stand der Technik ist es eine Aufgabe der vorliegenden Erfindung, eine weiter verbesserte Vorrichtung zur Zuführung von Deckeln zu einem Dosenverschließer bereitzustellen.

Die Aufgabe wird durch eine Vorrichtung zur Zuführung von Deckeln zu einem Dosenverschließer mit den Merkmalen des Anspruchs 1 gelöst. Vorteilhafte Weiterbildungen ergeben sich aus den Unteransprüchen.

Entsprechend wird eine Vorrichtung zur Zuführung von Deckeln zu einem Dosenverschließer vorgeschlagen, umfassend eine Abstapelschnecke zum Fördern von über eine Deckelzuführung zugeführten Deckeln und zur teilungsgerechten Übergabe der Deckel an eine nachgelagerte Transport- und/oder Behandlungseinrichtung und eine Stoppvorrichtung zum Unterbrechen der Zuführung der Deckel zur nachgelagerten Transport- und/oder Behandlungseinrichtung bei einer Produktionsunterbrechung. Erfindungsgemäß ist die Stoppvorrichtung durch die Abstapelschnecke ausgebildet.

Die Vorrichtung zur Zuführung von Deckeln zu einem Dosenverschließer dient dazu, Deckel zum Verschließen befüllter Dosen in einer Dosenabfüllanlage bereitzustellen. Die Dosenabfüllanlage kann hierbei für das Befüllen von Dosen für die Getränkeindustrie, Dosen für Lebensmittelkonserven oder Dosen für Non-Food Ware in allen möglichen und geeigneten Größen ausgelegt sein.

Die Abstapelschnecke ist dazu geeignet, die über die Deckelzuführung zugeführten Deckel zu fördern und teilungsgerecht an eine nachgelagerte Transport- und/oder Behandlungseinrichtung abzugeben. Die Abstapelschnecke weist dazu beispielsweise eine spiralförmige Nut auf, die jeweils in einen Randabschnitt eines Dosendeckels eingreift und diesen dann in Richtung der nachgelagerten Transport- und/oder Behandlungseinrichtung fördert. Mit anderen Worten werden die Dosendeckel einzeln aus der Deckelzuführung herausbewegt. Eine Förderung der Deckel findet nur dann statt, wenn die Abstapelschnecke rotiert.

Unter einer teilungsgerechten Übergabe wird eine Übergabe verstanden, die auf die nachgelagerte Transport- und/oder Behandlungseinrichtung abgestimmt ist. Die Übergabe der Deckel findet also nicht kontinuierlich statt, sondern getaktet, d.h. dann, wenn ein Deckel für eine befüllte und zu verschließenden Dose in der nachgelagerten Transport- und/oder Behandlungseinrichtung bereitgestellt werden soll. Diese Taktung kann beispielsweise über die Geometrie der Spiralnut der Abstapelschnecke oder über die Geometrie der Abstapelschnecke selbst und/oder über den Antrieb der Abstapelschnecke realisiert werden.

Die nachgelagerte Transport- und/oder Behandlungseinrichtung nimmt die von der der Abstapelschnecke bereitgestellten Deckel auf. Die nachgelagerte Transport- und/oder Behandlungseinrichtung transportiert die von der Abstapelschnecke bereitgestellten Deckel dann beispielsweise entweder an eine weitere nachgelagerte Transport- und/oder Behandlungseinrichtung oder führt direkt einen Behandlungsschritt durch. Behandlungsschritte können beispielsweise das Begasen der Deckel und/oder das Sterilisieren der Deckel sein, das Aufsetzen der Deckel auf befüllte Dosen oder das Verschließen der Dosen durch Falzen der Deckel.

Die Deckel können aber auch vor der Abstapelschnecke sterilisiert werden, beispielsweise auf dem Deckelstapel, von dem sie mittels der Abstapelschnecke zur Vereinzelung abgestapelt werden. Nachfolgend kann auch der Kopfraum der zu verschließenden Dose begast werden, so dass auf diese Weise eine Unterdeckelbegasung stattfindet.

Die nachgelagerte Transport- und/oder Behandlungseinrichtung kann in Form von rotierenden Transfer- und oder Behandlungssternen ausgebildet sein. Auch lineare Transporteinrichtungen, beispielsweise in Form von Förderbändern, sind möglich.

Die Stoppvorrichtung hat die Funktion, die Übergabe der über die Deckelzuführung zugeführten und von der Abstapelschnecke geförderten Deckel zu stoppen, wenn dies notwendig ist. Damit kann beispielsweise verhindert werden, dass weitere Deckel gefördert werden, obwohl in der nachgelagerte Transport- und/oder Behandlungseinrichtung keine zu verschließenden Dosen gefördert werden und somit keine Deckel bereitgestellt werden müssen.

Als Stoppvorrichtung wird entsprechend vorgeschlagen, die Förderung von Deckeln durch Stoppen der Abstapelschnecke zu unterbrechen. Die Abstapelschnecke erfüllt somit sowohl die Funktion einer Fördereinrichtung für die Deckel als auch die Funktion einer Stoppvorrichtung zum Zurückhalten der Dosendeckel.

Dadurch, dass die Stoppvorrichtung durch die Abstapelschnecke ausgebildet ist, ist eine zusätzliche Haltevorrichtung zum Zurückhalten der Deckel bei einer Produktionsunterbrechung nicht mehr erforderlich. Somit kann auf die zusätzliche, meist pneumatisch gesteuerte Baugruppe des Haltemessers verzichtet werden. Da auf diese Baugruppe verzichtet werden kann, wird der Aufbau der Vorrichtung zur Zuführung von Deckeln zu einem Dosenverschließer vereinfacht. Durch diesen einfacheren Aufbau ist eine bessere Reinigung der Anlage möglich, wodurch insgesamt die Produktqualität und die Stabilität verbessert werden können.

Dadurch, dass keine zusätzliche Haltevorrichtung, beispielsweise in Form eines Haltemessers, notwendig ist, welche bei einem Wechsel der Deckelgröße und/oder Deckelart aufwändig umgestellt und neu justiert werden muss, wird das Umstellen der Anlage vereinfacht und damit die Umrüstzeit beim Wechsel der zu befüllenden Behälter deutlich verkürzt. Da die Abstapelschnecke selbst die Funktion einer Stoppvorrichtung erfüllt und somit kein zusätzliches Haltemesser notwendig ist, wird auch ein Abtragen feiner Metallspäne von den Deckeln durch fehlerhaftes Ausfahren des Haltemessers verhindert. Somit besteht keine Gefahr der Beschädigung der Deckel bei einer Produktionsunterbrechung und damit auch keine Gefahr, dass abgetragene Metallspäne in das fertige Produkt gelangen können. Dies führt insgesamt zu einer höheren Produktqualität, zu einer besseren Produktstabilität und zu einer erhöhten Verbrauchersicherheit.

In einer bevorzugten Ausführungsform ist die Abstapelschnecke unabhängig von der nachgelagerten Transport- und/oder Behandlungseinrichtung angetrieben. Im Gegensatz zu den aus dem Stand der Technik bekannten Vorrichtungen zur Zuführung von Deckeln zu einem Dosenverschließer, bei welchen die Abstapelschnecke über den Antrieb der nachgelagerten Transport- und/oder Behandlungseinrichtung angetrieben wird, ist bei der vorliegenden Vorrichtung zur Zuführung von Deckeln zu einem Dosenverschließer ein separater Antrieb der Abstapelschnecke vorgesehen, welcher unabhängig von dem Antrieb der nachgelagerten Transport- und/oder Behandlungseinrichtung betrieben werden kann.

Durch den separaten Antrieb der Abstapelschnecke ist es weiterhin möglich, bei einer Produktionsunterbrechung, beispielsweise derart, dass keine zu verschließenden Dosen in der nachgelagerten Transport- und/oder Behandlungseinrichtung gefördert werden, die Abstapelschnecke unabhängig von dem Antrieb der nachgelagerte Transport- und/oder Behandlungseinrichtung anzuhalten. Mit anderen Worten läuft die nachgelagerte Transport- und/oder Behandlungseinrichtung bei einer Produktionsunterbrechung weiter, wohingegen die Abstapelschnecke gestoppt ist, was bislang durch die Kopplung der Abstapelschnecke an den Antrieb der nachgelagerten Transport- und/oder Behandlungseinrichtung nicht möglich war.

Dadurch, dass die Abstapelschnecke unabhängig von der nachgelagerten Transport- und/oder Behandlungseinrichtung angetrieben werden kann und somit auch unabhängig gestoppt werden kann, erfüllt die Abstapelschnecke gleichzeitig die Funktion einer Fördereinrichtung für Dosendeckel von über eine Deckelzuführung zugeführten Deckeln und zur teilungsgerechten Übergabe der Deckel an eine nachgelagerte Transport- und/oder Behandlungseinrichtung als auch die Funktion einer Stoppvorrichtung zum Zurückhalten der Dosendeckel bei einer Produktionsunterbrechung.

Sollen entsprechend beispielsweise keine Deckel zum Verschließen von befüllten Dosen bereitgestellt werden, kann die Abstapelschnecke somit angehalten werden, wohingegen die nachgelagerte Transport- und/oder Behandlungseinrichtung weiter betrieben wird, um den Füllvorgang nicht unnötig zu behindern und ein Anhalten der kompletten Abfüllanlage zu vermeiden. Wird die Abstapelschnecke angehalten, werden keine weiteren Deckel gefördert. Eine zusätzliche Haltevorrichtung zum Halten der Deckel ist dadurch nicht mehr erforderlich.

Sollen dann Deckel wieder zugeführt werden, wird der Antrieb der Abstapelschnecke wieder gestartet und es werden entsprechende Deckel gefördert. Ein aufwändiges Ein- und Ausfahren einer Haltevorrichtung mit einer zusätzlichen pneumatischen Steuerung entfällt.

In einer weiter bevorzugten Ausführungsform weist die Abstapelschnecke einen separaten Antrieb auf, bevorzugt einen Servoantrieb, wobei der separate Antrieb unabhängig von dem Antrieb der nachgelagerten Transport- und/oder Behandlungseinrichtung betrieben werden kann. Mithilfe des Servoantriebs kann die Drehgeschwindigkeit und die Beschleunigung des Antriebs der Abstapelschnecke kontrolliert werden, wodurch eine perfekte Abstimmung auf den Produktions- bzw. Verschließvorgang möglich ist.

Bevorzugt wird der Antrieb der Abstapelschnecke mit dem Antrieb der nachgelagerten Transport- und/oder Behandlungseinrichtung synchronisiert, um nach einem Stoppen die Abstapelschnecke wieder mit der nachgelagerten Transport- und/oder Behandlungseinrichtung zu synchronisieren und entsprechend wieder eine teilungsgerechte Zuführung zu erreichen.

In einer bevorzugten Ausführungsform wird der Antrieb der Abstapelschnecke mit dem Antrieb der nachgelagerten Transport- und/oder Behandlungseinrichtung über eine softwaremäßige Kopplung synchronisiert, bevorzugt über Drive - PLC (Powerline Communication).

Die nachgelagerten Transport- und/oder Behandlungseinrichtung gibt die Aufnahmegeschwindigkeit und die Teilung für die zuzuführenden Deckel vor. Nach einem von der nachgelagerten Transport- und/oder Behandlungseinrichtung unabhängigen Stoppen der Abstapelschnecke muss die Abstapelschnecke rechtzeitig wieder angefahren werden. Dies wird mittels der softwaremäßigen Kopplung, bevorzugt eine Drive - PLC, von Abstapelschnecke und nachgelagerter Transport- und/oder Behandlungseinrichtung realisiert. Hierdurch wird die Geschwindigkeit und Beschleunigung der nachgelagerten Transport- und/oder Behandlungseinrichtung erfasst und die Abstapelschnecke dementsprechend angefahren. Dadurch wird erreicht, dass die Abstapelschnecke eine Abgabegeschwindigkeit und Teilung von Deckeln erreicht hat, die exakt der Aufnahmegeschwindigkeit und Teilung von Deckeln in der nachgelagerten Transport- und/oder Behandlungseinrichtung entspricht, sobald nach einer Produktionsunterbrechung wieder zu verschließende Dosen in der nachgelagerten Transport- und/oder Behandlungseinrichtung gefördert werden und Deckel bereitgestellt werden müssen.

In einer weiter bevorzugten Ausführungsform ist die Abstapelschnecke mechanisch mit der nachgelagerten Transport- und/oder Behandlungseinrichtung gekoppelt und wird über den Antrieb der nachgelagerten Transport- und/oder Behandlungseinrichtung angetrieben, wobei die Abstapelschnecke zum Unterbrechen der Deckelzuführung von der nachgelagerten Transport- und/oder Behandlungseinrichtung entkoppelt werden kann. Die Abstapelschnecke kann auch über eine Bewegung des Karussells des Dosenfüllers oder über eine Bewegung eines Verschließers koppelbar angetrieben werden.

Mit anderen Worten ist die Abstapelschnecke in einem Betriebszustand, in dem Deckel gefördert werden sollen, mit der nachgelagerten Transport- und/oder Behandlungseinrichtung oder dem Karussell des Dosenfüllers oder eines Verschließers mechanisch derart verbunden, dass sie über den Antrieb der nachgelagerten Transport- und/oder Behandlungseinrichtung oder des Dosenfüllers oder eines Verschließers angetrieben wird. In einem Betriebszustand, in dem keine Deckel gefördert werden sollen, wenn die Abstapelschnecke also gestoppt werden soll, wird die mechanische Verbindung zwischen der Abstapelschnecke und der nachgelagerten Transport- und/oder Behandlungseinrichtung oder dem Karussell des Dosenfüllers oder einem Verschließer vorübergehend gelöst, wodurch die Abstapelschnecke nicht mehr von dem Antrieb der nachgelagerten Transport- und/oder Behandlungseinrichtung oder des Dosenfüllers oder eines Verschließers angetrieben wird. Die nachgelagerten Transport- und/oder Behandlungseinrichtung oder das Karussell des Dosenfüllers oder der Verschließer wird im entkoppelten Zustand weiter angetrieben, wohingegen die Abstapelschnecke nicht mehr angetrieben wird und folglich auch keine Deckel fördert.

Durch die mechanische und lösbare Kopplung der Abstapelschnecke mit der nachgelagerten Transport- und/oder Behandlungseinrichtung oder dem Karussell des Dosenfüllers oder des Verschließers wird ein einfacher Mechanismus bereitgestellt, mit dem die Abstapelschnecke unabhängig von dem Antrieb der nachgelagerten Transport- und/oder Behandlungseinrichtung oder des Dosenfüllers oder des Verschließers angehalten werden kann, bzw. eine Förderung von Deckeln unabhängig von dem Betrieb der nachgelagerten Transport- und/oder Behandlungseinrichtung oder des Dosenfüllers oder des Verschließers unterbrochen werden kann. Eine zusätzliche Haltevorrichtung ist hier ebenfalls nicht erforderlich, da die Abstapelschnecke im gekoppelten Zustand die Funktion einer Fördereinrichtung erfüllt und im entkoppelten Zustand die Funktion einer Stoppvorrichtung, dadurch dass sie nicht mehr von dem Antrieb der nachgelagerten Transport- und/oder Behandlungseinrichtung oder des Dosenfüllers oder des Verschließers angetrieben wird.

In einer bevorzugten Ausführungsform ist die nachgelagerte Transport- und/oder Behandlungseinrichtung ein Begasungsstern zur Begasung der Dosendeckel. Allgemein wird unter Begasen das Versetzen des Inhaltes einer Verpackung mit einem Schutzgas nach Evakuieren oder durch Gasspülen, z.B. zur Verlängerung der Haltbarkeit, verstanden. Um die Sauerstoffaufnahme bei der Dosenabfüllung niedrig zu halten, wird die Luft aus dem Kopfraum der Dose nach dem Füllen unmittelbar vor dem Verschließen durch eine Deckelbegasung mit Inertgas verdrängt. Das Begasen wird auch eingesetzt, um mit einem geeigneten Gas Keime an Packgütern, Packmitteln und Packstoffen abzutöten.

Bevorzugt kann die nachgelagerte Transport- und/oder Behandlungseinrichtung auch ein Dosenverschließer sein.

### Kurze Beschreibung der Figuren

Bevorzugte weitere Ausführungsformen der Erfindung werden durch die nachfolgende Beschreibung der Figuren näher erläutert. Dabei zeigen:
- Figur 1A: eine schematische Draufsicht auf einen Auslaufbereich eines Füllerkarussells mit nachgelagertem Dosenverschließer bei der Übergabe von Deckeln,
- Figur 1B: eine schematische Draufsicht auf einen Auslaufbereich eines Füllerkarussels eines Dosenfüllers und einem nachgelagerten Dosenverschließer bei der Übergabe von Deckeln in einer weiteren Ausführungsform,
- Figur 2: eine schematische, teilgeschnittene Seitenansicht einer Vorrichtung zum Zuführen von Deckeln zu einem Dosenverschließer, wobei Deckel von einer mit einem eigenen Antrieb angetriebenen Abstapelschnecke zugefördert werden,
- Figur 3: die Vorrichtung der Figur 2, wobei der Antrieb der Abstapelschnecke angehalten ist und keine Deckel zugefördert werden,
- Figur 4A bis 4E: schematisch in einer Draufsicht eine Darstellung der Synchronisation des Antriebs der Abstapelschnecke und des Antriebs einer nachgelagerte Transport- und/oder Behandlungseinrichtung,
- Figur 5: eine schematische, teilgeschnittene Seitenansicht einer Vorrichtung zur Zuführung von Deckeln zu einem Dosenverschließer, wobei eine Abstapelschnecke mechanisch an die nachgelagerte Transport- und/oder Behandlungseinrichtung gekoppelt ist und Deckel zugefördert werden, und
- Figur 6: die Vorrichtung der Figur 5, wobei die Abstapelschnecke von der nachgelagerten Transport- und/oder Behandlungseinrichtung entkoppelt ist und keine Deckel zugefördert werden.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

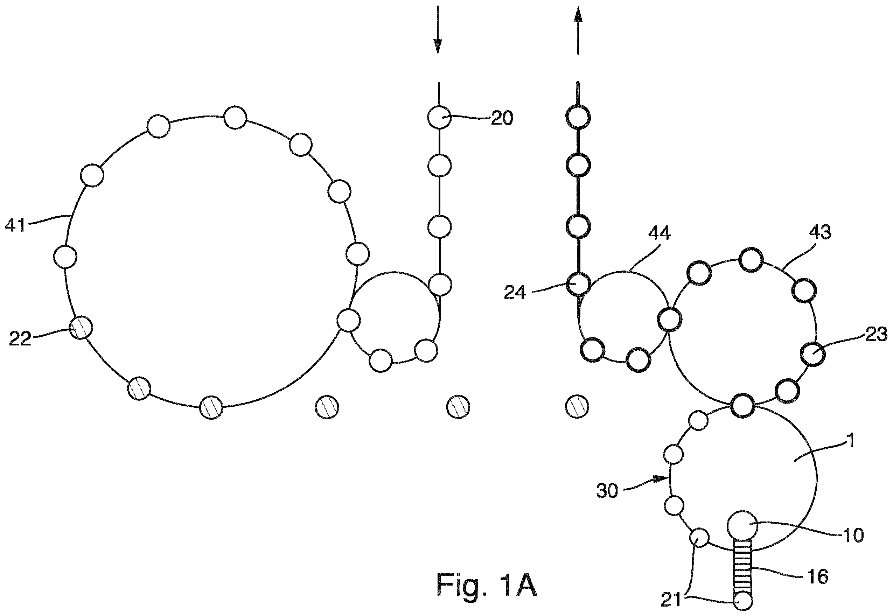

In Figur 1A ist schematisch eine Draufsicht auf einen Auslaufbereich eines Dosenfüllers 41 gezeigt, an den sich ein schematisch angedeuteter Verschließer 43 anschließt. Zu befüllende Dosen 20 werden in dem Dosenfüller 41 mit dem gewünschten Produkt befüllt.

Grundsätzlich umfasst das Befüllen der Dosen 20 in dem Dosenfüller 41 beispielweise die folgenden Schritte: Einbringen der zu befüllenden Dosen 20 in den Dosenfüller 41, Spülen der Dosen 20 mit CO₂ und Vorspannen mit CO₂, Füllen mit einem karbonisierten Füllprodukt, langsame Druckentlastung zur Vermeidung des Aufschäumens.

In einer weiteren Betriebsart können auch stille Füllprodukte abgefüllt werden, so dass zumindest auf das Vorspannen der Dose 20 mit CO₂ verzichtet werden kann.

Wie in Figur 1A gezeigt, werden die auf diese Weise befüllten Dosen 22 dann zunächst ohne Deckel 21 nach dem Füllvorgang aus dem Dosenfüller 41 heraus transportiert.

Um die befüllten Dosen 22 verschließen zu können, müssen entsprechende Dosendeckel 21 bereitgestellt werden. Das Bereitstellen der Dosendeckel 21 erfolgt in einer Vorrichtung 1 zum Zuführen von Dosendeckeln. Hierbei werden in einer Deckelzuführung 16 zugeführte Deckel 21 über eine rotierende Abstapelschnecke 10 entnommen und an eine nachgelagerte Transporteinrichtung 30 übergeben. Die nachgelagerte Transporteinrichtung 30 ist hier als Förderstrecke in Form eines Transportsterns, in dessen Transporttaschen die von der Abstapelschnecke 10 abgestapelten Deckel übergeben werden, ausgebildet.

Von der nachgelagerten Transporteinrichtung 30 werden die Deckel 21 an einen Verschließer 43 übergeben und in welchem die Dosen 23 mit den Deckeln 21 derart miteinander verbunden werden, dass eine gas- und flüssigkeitsdichte Verpackung entsteht. Die Deckel 21 können im Verschließer 43 auf die Dosen 20 aufgelegt werden und dann mit diesen flüssigkeitsdicht und gasdicht verbunden werden.

Die Übergabe der Deckel 21 auf die Dosen 20 kann aber prinzipiell auch an einer anderen Position vor dem Verschließer erfolgen.

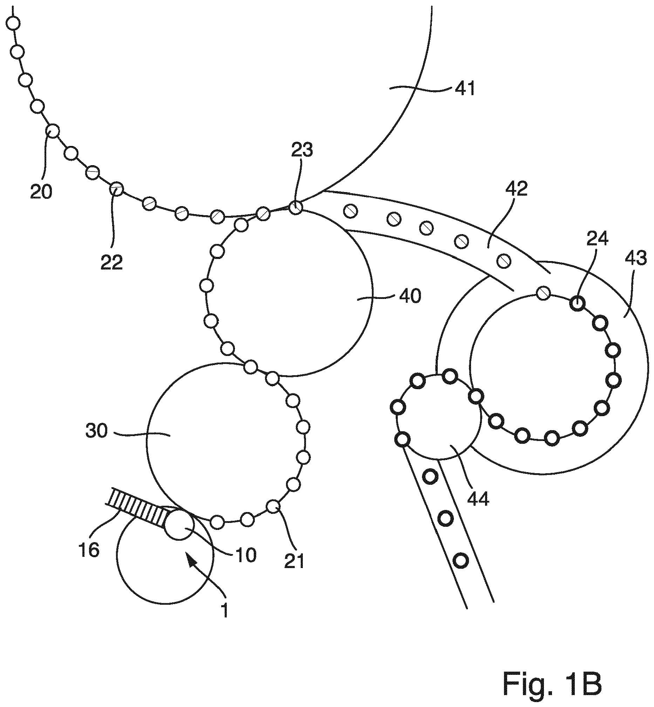

In einer alternativen Ausgestaltung der Vorrichtung, die in Figur 1B gezeigt ist, ist schematisch eine Draufsicht auf einen Auslaufbereich eines Dosenfüllers 41 gezeigt, an den sich ein schematisch angedeuteter Verschließer 43 anschließt. Zu befüllende Dosen 20 werden in dem Dosenfüller 41 mit dem gewünschten Produkt befüllt.

Wie auch in Figur 1A gezeigt, werden auch in der Ausführungsform der Figur 1B die auf diese Weise befüllten Dosen 22 dann zunächst ohne Deckel 21 nach dem Füllvorgang aus dem Dosenfüller 41 heraus transportiert.

Um die befüllten Dosen 22 verschließen zu können, müssen entsprechende Dosendeckel 21 bereitgestellt werden. Das Bereitstellen der Dosendeckel 21 erfolgt in einer Vorrichtung 1 zum Zuführen von Dosendeckeln. Hierbei werden in einer Deckelzuführung 16 zugeführte Deckel 21 über eine rotierende Abstapelschnecke 10 entnommen und an eine nachgelagerte Transport- und/oder Behandlungseinrichtung 30 übergeben. Die nachgelagerte Transport- und/oder Behandlungseinrichtung 30 kann beispielsweise als Begasungsstern ausgeführt sein, wobei die Deckel 21 mit Inertags begast werden, um Sauerstoff zu verdrängen oder mit einem geeigneten Gas begast werden, um Keime abzutöten. Von der nachgelagerten Transport- und/oder Behandlungseinrichtung 30 werden die Deckel 21 über einen Transportstern 40 transportiert und auf die befüllten Dosen 22 aufgelegt. Befüllte Dosen 23 mit aufgelegtem Deckel 21 werden anschließend über ein Transportband 42 zu einem Verschließer 43 gefördert, in welchem die Dosen 23 mit den aufgelegten Deckeln 21 derart miteinander verbunden werden, dass eine gas- und flüssigkeitsdichte Verpackung entsteht. Der Verschließer 43 umfasst dabei folgende nicht dargestellte Elemente: einen federnd gelagerten Pinolenteller, einen Verschließkopf und einen Verschließrolle.

Beim Verschließen einer Dose 23 im Verschließer 43 wird der aufgesetzte Deckel 21 durch zwei aufeinanderfolgenden Schritte mit dem Dosenrand der Dose 23 so fest verbördelt, dass die Dose 23 gas- und flüssigkeitsdicht verschlossen wird. Im Verschließer 43 werden in einem ersten Schritt die zu verschließenden Dosen 23 durch den Pinolenteller angehoben und mit dem aufgesetzten Deckel 21 gegen einen Verschließkopf gedrückt. Der mit der Dose rotierende Verschließkopf hält den Deckel 21 in seiner Position, wobei die sich gegenläufige drehende Verschließrolle gegen den Verschließkopf presst und dabei den äußeren Teil des Deckels 21 nach unten um den Dosenfalz der Dose 23 biegt. In einem zweiten Schritt wird der Verschluss zwischen Dose 23 und Deckel 21 durch Andrücken der Verschließrolle gas- und flüssigkeitsdicht hergestellt. Verschlossene Dosen 24 werden über einen Auslaufstern 44 aus dem Verschließer 43 transportiert und beispielsweise an eine (nicht gezeigte) Inspektionseinrichtung zur Kontrolle der Füllhöhe weitergegeben.

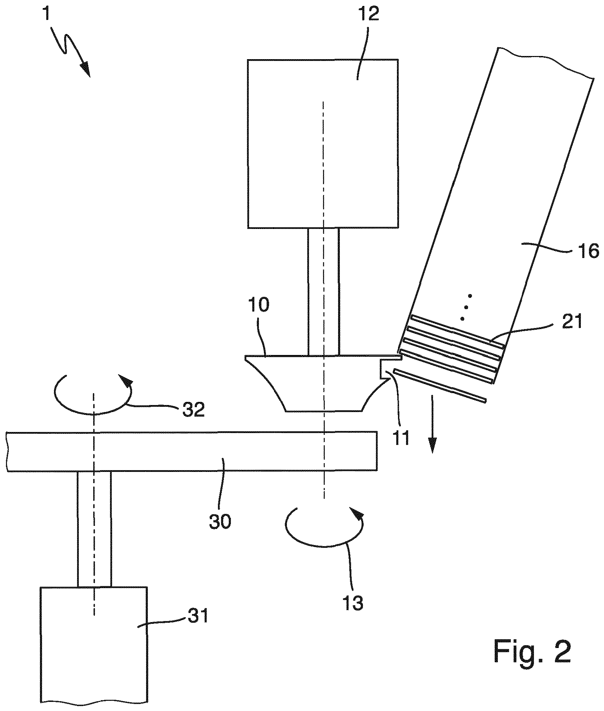

In Figur 2 zeigt eine schematische, teilgeschnittene Seitenansicht der Vorrichtung 1 zum Zuführen von Deckeln 21 zu dem Dosenverschließer 43, wobei die Deckel 21 von einer mit einem eigenen Antrieb 12 angetriebenen Abstapelschnecke 10 zugefördert werden. Der Antrieb 12 ist bevorzugt ein Servoantrieb oder ein anderer individuell ansteuerbarer Aktuator.

Die zu fördernden Deckel 21 werden in der Deckelzuführung 16 zugeführt, welche unmittelbar oberhalb der Abstapelschnecke 10 angeordnet ist. Die Deckel 21 werden entweder allein durch die Schwerkraft nach unten in Richtung der Abstapelschnecke 10 gefördert oder durch einen entsprechenden, nicht dargestellten Antrieb. Die Abstapelschnecke 10 wird durch den Antrieb 12 angetrieben, wodurch sie eine Rotationsbewegung, welche durch einen Pfeil 13 angedeutet ist, durchführt. Die Abstapelschnecke 10 weist eine spiralförmige Nut 11 auf, welche jeweils mit einem Randbereich eines einzelnen Deckels 21 in Eingriff kommt. Die spiralförmige Nut 11 ist derart geformt, dass sie einen einzelnen Deckel 21 aus der Zuführung 16 bewegen kann und diesen durch die Rotationsbewegung 13 der Abstapelschnecke 10 nach unten in Richtung der nachfolgende Transport- und/oder Behandlungseinrichtung 30 fördern und abgegeben kann. Nach der Abgabe eines einzelnen Deckels 21 an die nachfolgende Transport- und/oder Behandlungseinrichtung 30 rotiert die Abstapelschnecke 10 weiter und kann erneut einen einzelnen Deckel 21 aus der Zuführung 16 aufnehmen und an die nachfolgende Transport- und/oder Behandlungseinrichtung 30 fördern.

Figur 2 zeigt weiter die der Abstapelschnecke 10 nachfolgende Transport- und/oder Behandlungseinrichtung 30, welche einen separaten Antrieb 31 aufweist. Die nachfolgende Transport- und/oder Behandlungseinrichtung 30 rotiert in Richtung der mit einem Pfeil 32 angedeuteten Richtung.

Der Antrieb 31 der nachfolgende Transport- und/oder Behandlungseinrichtung 30 und der Antrieb 12 der Abstapelschnecke 10 sind derart aufeinander abgestimmt, dass die Abgabegeschwindigkeit der Abstapelschnecke 10 von Deckeln 21 aus der Zuführung 16 exakt der Aufnahmegeschwindigkeit der nachfolgende Transport- und/oder Behandlungseinrichtung 30 entspricht. So wird sichergestellt, dass für jede zu befüllende und zu verschließende Dose (in Figur 2 nicht gezeigt) rechtzeitig ein Deckel 21 bereitgestellt wird und es nicht zu Verzögerungen oder Störungen kommt.

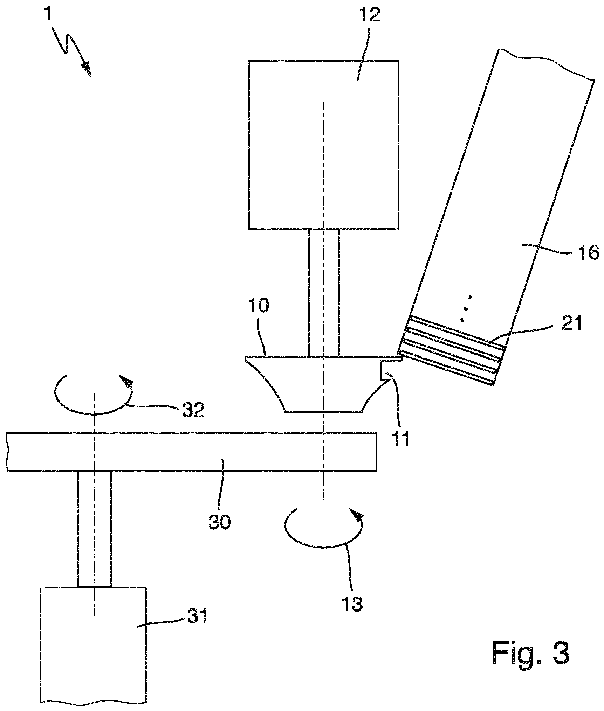

Figur 3 zeigt die Vorrichtung 1 der Figur 2, wobei der Antrieb 12 der Abstapelschnecke 10 angehalten ist und keine Deckel 21 zugefördert werden. Im Gegensatz zu Figur 2 werden nun keine Deckel 21 von der Abstapelschnecke 10 an die nachgelagerte Transport- und/oder Behandlungseinrichtung 30 abgeben. Beispielsweise ist das der Fall, wenn in der nachgelagerte Transport- und/oder Behandlungseinrichtung 30 keine zu verschließenden Dosen 23 gefördert werden und somit keine Deckel 21 bereitgestellt werden müssen. Wie in Figur 2 wird die der Abstapelschnecke 10 nachgelagerte Transport- und/oder Behandlungseinrichtung 30 mittels des Antriebs 31 in Richtung des Pfeils 32 angetrieben. Im Gegensatz zu Figur 2 ist die Abstapelschnecke 10 jedoch angehalten, d.h. sie wird nicht mehr durch den Antrieb 12 angetrieben. Die nachgelagerte Transport- und/oder Behandlungseinrichtung 30 rotiert also weiter, wohingegen die Abstapelschnecke 10 still steht. Dadurch, dass die Abstapelschnecke 10 mittels der spiralförmigen Nut 11 nur Deckel fördern kann, wenn sie durch den Antrieb 12 angetrieben wird, d.h. rotiert, werden keine Deckel 21 gefördert, wenn die Abstapelschnecke 10 still steht. Die Abstapelschnecke 10 erfüllt somit die Funktion einer Stoppvorrichtung, wenn sie nicht angetrieben wird. Wie in Figur 3 dargestellt, stoppt die stillstehende Abstapelschnecke 10 die Zuführung 16 gespeichert Deckel 21, wodurch keine Deckel 21 an die nachgelagerte Transport- und/oder Behandlungseinrichtung 30 gefördert werden. Dadurch, dass die Abstapelschnecke 10 unabhängig von dem Antrieb 31 der nachgelagerte Transport- und/oder Behandlungseinrichtung 30 angehalten werden kann, erfüllt sie die Funktion einer Förder- und einer Stoppeinrichtung, weshalb keine zusätzliche Haltevorrichtung zum Halten der Deckel 21 im Falle einer Produktionsunterbrechung notwendig ist.

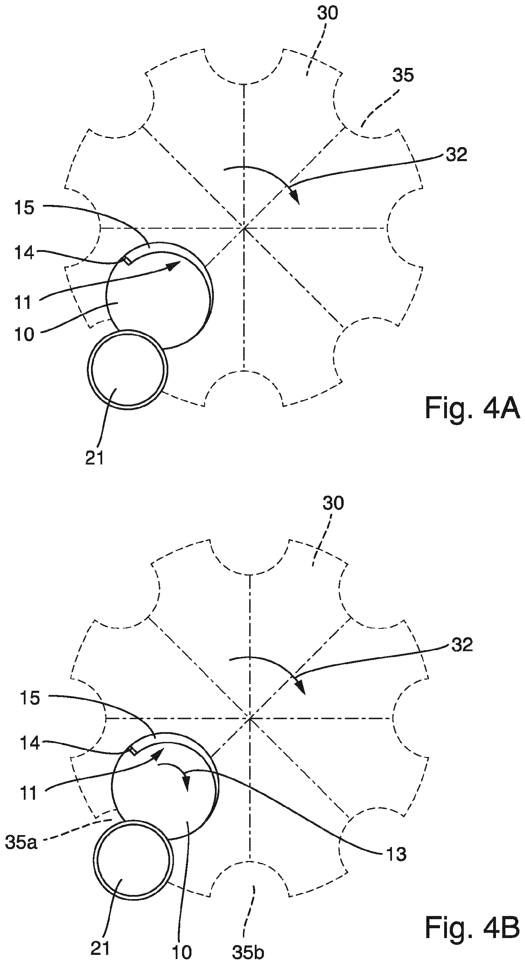

Figur 4A bis 4E zeigt schematisch eine Draufsicht einer Darstellung der Synchronisation des Antriebs 12 der Abstapelschnecke 10 und des Antriebs 31 der nachgelagerte Transport- und/oder Behandlungseinrichtung 30. Die Synchronisation umfasst die Phasen Einkuppeln, Synchronlauf und Auskuppeln. Unter Kuppeln wird der Schritt verstanden, in dem der Antrieb 12 der Abstapelschnecke 10 nach einem beispielsweise durch eine Produktionsunterbrechung bedingten Anhalten der Abstapelschnecke 10, bei welchem der Antrieb 31 der nachgelagerten Transport- und/oder Behandlungseinrichtung 30 weiterläuft, wieder angefahren wird, um rechtzeitig auf die Geschwindigkeit des Antriebs 31 der nachgelagerten Transport- und/oder Behandlungseinrichtung 30 zu beschleunigen.

In Figur 4A ist eine schematische Draufsicht über eine mögliche Anordnung der Abstapelschnecke 10 zu der nachgelagerten Transport- und/oder Behandlungseinrichtung 30 und ein Deckel 21 gezeigt. Die Abstapelschnecke 10 weist eine spiralförmige Nut 11 mit einer Sichelfase 15 und einem Abtrennmesser 14 auf. Die spiralförmige Nut 11 und die Sichelfase 15 dienen dazu, einen einzelnen Deckel 21 von einer (in Fig. 4A nicht gezeigten) Deckelzuführung aufzunehmen und durch eine Rotationsbewegung 13 in Richtung der nachgelagerten Transport- und/oder Behandlungseinrichtung 30 zu fördern. Mithilfe des Abtrennmessers 14 wird der Deckel 21 anschließend an die nachgelagerte Transport- und/oder Behandlungseinrichtung 30 abgegeben und die Abstapelschnecke 10 kann erneut einen einzelnen Deckel 21 aus der Deckelzuführung 16 aufnehmen. Die nachgelagerte Transport- und/oder Behandlungseinrichtung 30 weist entlang ihres Umfanges eine Vielzahl von Taschen 35 auf, in die die von der Abstapelschnecke 10 geförderten Deckel 21 abgegeben werden.

In Figur 4B ist die Ausgangsposition der Abstapelschnecke 10 und der nachgelagerten Transport- und/oder Behandlungseinrichtung 30 gezeigt. Die Ausgangsposition beschreibt den Zustand, in dem die Abstapelschnecke 10 aufgrund einer Produktionsunterbrechung angehalten ist, d.h. nicht rotiert. Die nachgelagerte Transport- und/oder Behandlungseinrichtung 30 hingegen wird durch den Antrieb 31 angetrieben und rotiert in Richtung des Pfeils 32. In diesem Zustand erfüllt die Abstapelschnecke 10 die Funktion einer Stoppvorrichtung, die Deckel 21 werden also nicht gefördert, sondern in der Deckelzuführung zurückgehalten. Wie in Figur 4B zu erkennen ist, liegt der Deckel 21 auf der Abstapelschnecke 10 auf, jedoch nicht auf der Sichelfase 15. Ist die Produktionsunterbrechung aufgehoben, muss der Antrieb 12 der Abstapelschnecke 10 wieder gestartet werden. Dies erfolgt im Schritt des Einkuppelns. Hierbei beginnt der Antrieb 12 die Abstapelschnecke 10 anzutreiben, damit rechtzeitig ein Deckel 21 bereitgestellt werden kann. Der Startbefehl für den Antrieb 12 erfolgt bereits eine Teilung zuvor, d.h. bei einer ersten Tasche 35a, damit für eine darauffolgende zweite Tasche 35b rechtzeitig ein Deckel 21 bereitgestellt werden kann. Befindet sich die Abstapelschnecke 10 dann über der zweiten Tasche 35b, hat sie bereits die dafür erforderliche Geschwindigkeit erreicht.

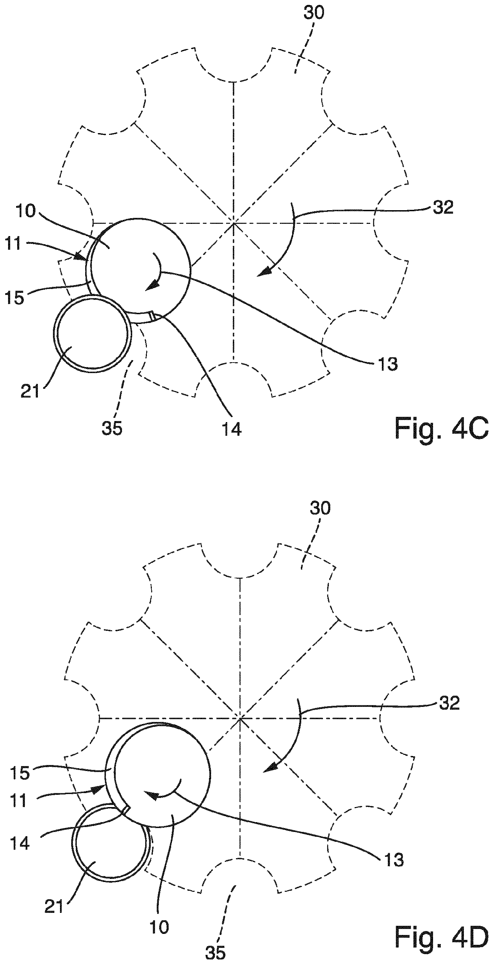

In Figur 4C ist schematisch die Synchronposition des Antriebs 12 der Abstapelschnecke 10 und des Antriebs 31 der nachgelagerten Transport- und/oder Behandlungseinrichtung 30 dargestellt. Der Antrieb 12 beschleunigt, wie in Figur 4B beschrieben, bis zur Synchronposition. An dieser Synchronposition ist der Synchronlauf zwischen der Abstapelschnecke 10 und der nachgelagerten Transport- und/oder Behandlungseinrichtung 30 hergestellt. Hierbei wird ein Deckel 21 über die Sichelfase 15 und das Abtrennmesser 14 von der Deckelzuführung 16 separiert.

In Figur 4D ist schematisch der Synchronlauf des Antriebs 12 der Abstapelschnecke 10 und des Antriebs 31 der nachgelagerten Transport- und/oder Behandlungseinrichtung 30 dargestellt. Im Synchronlauf entspricht die Abgabegeschwindigkeit der Deckel 21 der Abstapelschnecke 10 der Aufnahmegeschwindigkeit der nachgelagerten Transport- und/oder Behandlungseinrichtung 30. Die Abstapelschnecke 10 rotiert im Synchronlauf also genau so schnell, dass für jede Tasche 35 rechtzeitig genau ein Deckel 21 bereitgestellt wird, also von der Abstapelschnecke 10 mithilfe des Abtrennmessers 14 an eine Tasche 35 abgegeben wird. Der Synchronlauf dauert so lange an, bis eine Produktionsunterbrechung eintritt, d.h. solange in der nachgelagerten Transport- und/oder Behandlungseinrichtung 30 Deckel 21 bereitgestellt werden müssen.

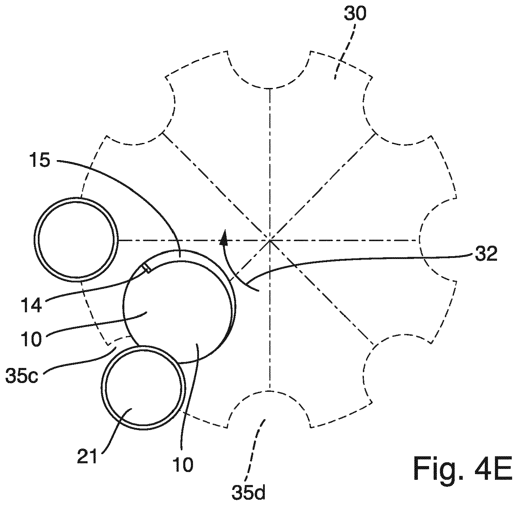

In Figur 4E ist schematisch die Auskuppelposition dargestellt. Auskuppeln bedeutet, dass die Abstapelschnecke 10 im Fall einer Produktionsunterbrechung abgebremst und angehalten wird, wohingegen die nachgelagerte Transport- und/oder Behandlungseinrichtung 30 weiter angetrieben wird. Kommt es zu einer Produktionsunterbrechung wird das Signal zum Anhalten der Abstapelschnecke 10 bereits eine Teilung zuvor, d.h. bereits bei einer ersten Tasche 35c erteilt, damit an eine darauffolgende zweite Tasche 35d kein Deckel 21 mehr abgegeben wird. Das Abbremsen der Abstapelschnecke 10 erfolgt also im Bereich der ersten Tasche 35c, sodass die Abstapelschnecke 10 im Bereich der zweiten Tasche 35d bereits vollständig still steht und somit keinen Deckel 21 an die Tasche 35d abgibt, sondern wieder die Funktion einer Stoppvorrichtung, wie in Figur 4B erläutert, erfüllt.

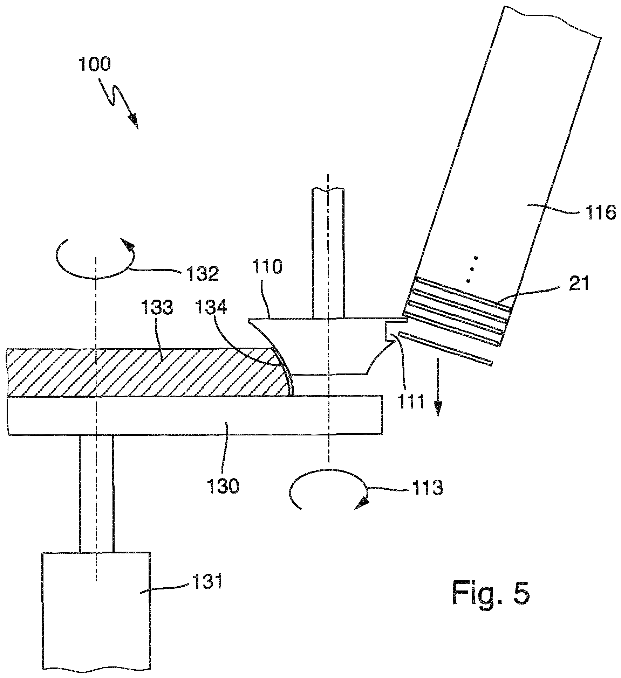

Figur 5 zeigt eine schematische, teilgeschnittene Seitenansicht einer Vorrichtung 100 zur Zuführung von Deckeln 121 zu einem Dosenverschließer 143, wobei eine Abstapelschnecke 110 mechanisch an eine nachgelagerte Transport- und/oder Behandlungseinrichtung 130 gekoppelt ist und Deckel 121 zugefördert werden. Die zu fördernden Deckel 121 werden über eine Deckelzuführung 116 zugeführt, welche unmittelbar oberhalb der Abstapelschnecke 110 angeordnet ist. Die Deckel 121 werden entweder allein durch die Schwerkraft nach unten in Richtung der Abstapelschnecke 110 gefördert oder durch einen entsprechenden, nicht dargestellten Antrieb. Weiter ist eine der Abstapelschnecke 110 nachgelagerte Transport- und/oder Behandlungseinrichtung 130 gezeigt, welche einen Antrieb 131 aufweist. Die nachgelagerte Transport- und/oder Behandlungseinrichtung 130 rotiert in Richtung der mit einem Pfeil 132 angedeuteten Richtung. Die nachgelagerte Transport- und/oder Behandlungseinrichtung 130 weist eine mechanische Kopplungseinrichtung 133 mit einem Kopplungsbereich 134 auf. Diese mechanische Kopplungseinrichtung 133 ist über den Kopplungsbereich 134 lösbar mit der Abstapelschnecke 110 derart verbunden, dass die Abstapelschnecke 110 über den Antrieb 131 der nachgelagerte Transport- und/oder Behandlungseinrichtung 130 in gemäß dem Pfeil 113 angetrieben, d.h. rotiert wird.

Die Abstapelschnecke 110 hat also keinen eigenen Antrieb, sondern ist lösbar mit dem Antrieb 131 der nachgelagerte Transport- und/oder Behandlungseinrichtung 130 gekoppelt. Die Abstapelschnecke 110 weist eine spiralförmige Nut 111 auf, welche jeweils einen einzelnen Deckel 121 von der Zuführung 116 aufnehmen und an die nachfolgende Transport- und/oder Behandlungseinrichtung 130 abgeben kann. Die spiralförmige Nut 111 ist derart geformt, dass sie einen einzelnen Deckel 121 aus der Zuführung 116 aufnehmen kann und durch die Rotationsbewegung 113 der Abstapelschnecke 110 nach unten in Richtung der nachfolgende Transport- und/oder Behandlungseinrichtung 130 fördern und abgegeben kann. Nach der Abgabe eines einzelnen Deckels 116 an die nachfolgende Transport- und/oder Behandlungseinrichtung 130 rotiert die Abstapelschnecke 110 weiter und kann erneut einen einzelnen Deckel 121 aus der Zuführung 116 aufnehmen und an die nachfolgende Transport- und/oder Behandlungseinrichtung 130 fördern.

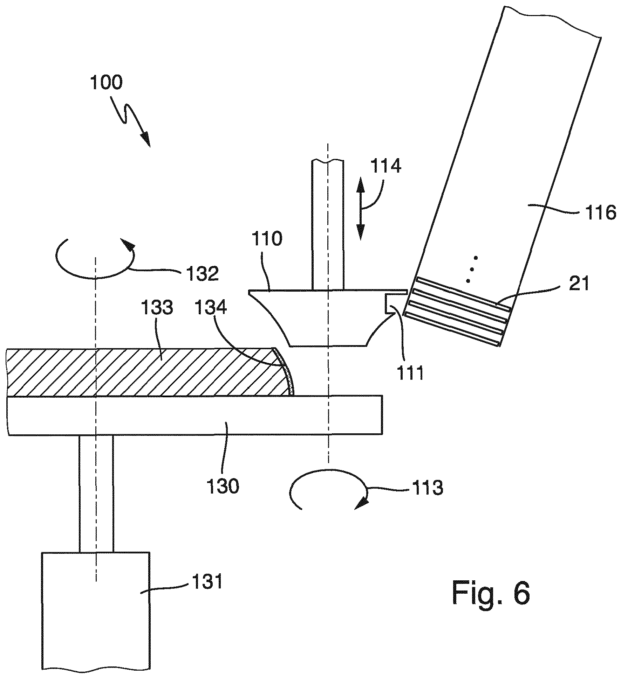

Figur 6 zeigt die Vorrichtung 100 der Figur 5, wobei die Abstapelschnecke 110 von der nachgelagerten Transport- und/oder Behandlungseinrichtung 130 entkoppelt ist und keine Deckel 21 zugefördert werden. Im Gegensatz zu Figur 5 werden nun keine Deckel 21 von der Abstapelschnecke 110 an die nachgelagerte Transport- und/oder Behandlungseinrichtung 130 abgeben. Beispielsweise ist das Fall, wenn in der nachgelagerte Transport- und/oder Behandlungseinrichtung 130 keine zu verschließenden Dosen 23 gefördert werden und somit keine Deckel 21 bereitgestellt werden müssen. Wie in Figur 5 wird die der Abstapelschnecke 110 nachgelagerte Transport- und/oder Behandlungseinrichtung 130 mittels eines Antriebs 131 in Richtung des Pfeils 132 angetrieben.

Im Gegensatz zu Figur 5 ist die Abstapelschnecke 110 jedoch angehalten. Die Abstapelschnecke 110 ist von dem Kopplungsbereich 134 der mechanischen Kopplungseinrichtung 133 entkoppelt. In dem entkoppelten Zustand wird die Abstapelschnecke 110 nicht mehr durch den Antrieb 131 der nachgelagerten Transport- und/oder Behandlungseinrichtung 130 angetrieben. Das Koppeln bzw. Entkoppeln der Abstapelschnecke 110 und der mechanischen Kopplungseinrichtung 133 kann über eine vertikale oder horizontale Bewegung der Abstapelschnecke 110 oder der Kopplungseinrichtung 133 erfolgen, wie beispielsweise durch eine Pfeil 114 angedeutet. Die nachgelagerte Transport- und/oder Behandlungseinrichtung 130 rotiert also weiter, wohingegen die Abstapelschnecke 110 still steht.

Dadurch, dass die Abstapelschnecke 110 mittels der spiralförmigen Nut 111 nur Deckel 21 fördern kann, wenn sie durch den Antrieb 112 angetrieben wird, d.h. rotiert, werden keine Deckel 21 gefördert, wenn die Abstapelschnecke 110 still steht. Die Abstapelschnecke 110 erfüllt somit die Funktion einer Stoppvorrichtung, wenn sie nicht angetrieben wird. Wie in Figur 6 dargestellt, stoppt die stillstehende Abstapelschnecke 110 der Zuführung 116 gespeichert Deckel 21, wodurch keine Deckel 21 an die nachgelagerte Transport- und/oder Behandlungseinrichtung 130 gefördert werden. Dadurch, dass die Abstapelschnecke 110 unabhängig von dem Antrieb 131 der nachgelagerte Transport- und/oder Behandlungseinrichtung 130 angehalten werden kann, d.h. von dem Antrieb 131 der nachgelagerte Transport- und/oder Behandlungseinrichtung 131 entkoppelt werden kann, erfüllt sie die Funktion einer Förder- und einer Stoppeinrichtung, weshalb keine zusätzliche Haltevorrichtung zum Halten der Deckel 21 im Falle einer Produktionsunterbrechung notwendig ist.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1, 100: Vorrichtung zur Zuführung von Deckeln zu einem Dosenverschließer
- 10, 110: Abstapelschnecke
- 11, 11: spiralförmige Nut
- 12: Antrieb der Abstapelschnecke
- 13, 113: Drehrichtung Abstapelschnecke
- 14: Abtrennmesser
- 15: Sichelfase
- 16, 116: Deckelzuführung
- 20: Dose
- 21: Deckel
- 22: befüllte Dose ohne Deckel
- 23: Dose mit losem Deckel
- 24: verschlossene Dose
- 30, 130: Transport-/Behandlungseinrichtung
- 31, 131: Antrieb der Transport-/Behandlungseinrichtung
- 32, 132: Drehrichtung der Transport-/Behandlungseinrichtung
- 35: Tasche
- 40: Transferstern
- 41: Dosenfüller
- 42: Transportband
- 43, 143: Verschließer
- 44: Auslaufstern
- 114: Bewegungsrichtung der Abstapelschnecke
- 133: mechanische Kopplungseinrichtung
- 134: Kopplungsbereich

## Patentansprüche

1. Vorrichtung (1) zur Zuführung von Deckeln (21) zu einem Dosenverschließer, umfassend eine Abstapelschnecke (10) zum Fördern von über eine Deckelzuführung (16) zugeführten Deckeln (21) und zur teilungsgerechten Übergabe der Deckel (21) an eine nachgelagerte Transport- und/oder Behandlungseinrichtung (30), weiterhin umfassend eine Stoppvorrichtung zum Unterbrechen der Zuführung der Deckel (21) zur nachgelagerten Transport- und/oder Behandlungseinrichtung (30) bei einer Produktionsunterbrechung,
**dadurch gekennzeichnet, dass**
die Stoppvorrichtung durch die Abstapelschnecke (10) ausgebildet ist, so dass die Förderung von Deckeln (21) durch Stoppen der Abstapelschnecke (10) unterbrochen wird, wobei bei der Produktionsunterbrechung die nachgelagerte Transport- und Behandlungseinrichtung (30) weiterläuft.

2. Vorrichtung (1) gemäß Anspruch 1, **dadurch gekennzeichnet, dass** die Abstapelschnecke (10) unabhängig von der nachgelagerten Transport- und/oder Behandlungseinrichtung (30) angetrieben ist.

3. Vorrichtung (1) gemäß einem der vorstehenden Ansprüche, **dadurch gekennzeichnet, dass** die Abstapelschnecke (10) einen separaten Antrieb (12) aufweist, bevorzugt einen Servoantrieb, wobei der separate Antrieb (12) unabhängig von dem Antrieb (31) der nachgelagerten Transport- und/oder Behandlungseinrichtung (31) betrieben werden kann.

4. Vorrichtung (1) gemäß Anspruch 3, **dadurch gekennzeichnet, dass** der Antrieb (12) der Abstapelschnecke (10) mit dem Antrieb (31) der nachgelagerten Transport- und/oder Behandlungseinrichtung (30) synchronisiert werden kann.

5. Vorrichtung (1) gemäß Anspruch 4, **dadurch gekennzeichnet, dass** der Antrieb (12) der Abstapelschnecke (10) mit dem Antrieb (31) der nachgelagerten Transport- und/oder Behandlungseinrichtung (30) über eine softwaremäßige Kopplung, bevorzugt über Drive-PLC, synchronisiert wird.

6. Vorrichtung (1) gemäß Anspruch 1, **dadurch gekennzeichnet, dass** die Abstapelschnecke (10) mechanisch mit der nachgelagerten Transport- und/oder Behandlungseinrichtung (30) gekoppelt ist und über den Antrieb (31) der nachgelagerten Transport- und/oder Behandlungseinrichtung (30) angetrieben ist, wobei die Abstapelschnecke (10) bei einer Produktionsunterbrechung von der nachgelagerten Transport- und/oder Behandlungseinrichtung (30) entkoppelt werden kann.

7. Vorrichtung (1) gemäß einem der vorstehenden Ansprüche, **dadurch gekennzeichnet, dass** die nachgelagerte Transport- und/oder Behandlungseinrichtung (30) ein Begasungsstern zur Begasung der Dosendeckel (21) ist.

8. Vorrichtung (1) gemäß einem der vorstehenden Ansprüche, **dadurch gekennzeichnet, dass** die nachgelagerte Transport- und/oder Behandlungseinrichtung (30) ein Dosenverschließer ist.

## Claims

1. Device (1) for supplying lids (21) to a machine for closing cans, comprising a destacking screw (10) for conveying lids (21) supplied by a lid feed (16) and for transferring separated lids (21) to a downstream transport and/or processing device (30), also comprising a stop device for interrupting the supply of lids (21) to the downstream transport and/or processing device (30) during an interruption of production,
**characterised in that**
the stop device is formed by the destacking screw (10), so that the conveying of lids (21) is interrupted by stopping the destacking screw (10), wherein during the interruption to production the downstream transport and processing device (30) continues to run.

2. Device (1) according to claim 1, **characterised in that** the destacking screw (10) is driven independently of the downstream transport and/or processing device (30).

3. Device (1) according to any of the preceding claims, **characterised in that** the destacking screw (10) has a separate drive (12), preferably a servodrive, wherein the separate drive (12) can be operated independently of the drive (31) of the downstream transport and/or processing device (31).

4. Device (1) according to claim 3, **characterised in that** the drive (12) of the destacking screw (10) can be synchronised with the drive (31) of the downstream transport and/or processing device (30).

5. Device (1) according to claim 4, **characterised in that** the drive (12) of the destacking screw (10) is synchronised with the drive (31) of the downstream transport and/or processing device (30) by a software coupling, preferably by Drive PLC.

6. Device (1) according to claim 1, **characterised in that** the destacking screw (10) is mechanically coupled to the downstream transport and/or processing device (30), and is driven by the drive (31) of the downstream transport and/or processing device (30), wherein the destacking screw (10) can be decoupled from the downstream transport and/or processing device (30) during an interruption of production.

7. Device (1) according to any of the preceding claims, **characterised in that** the downstream transport and/or processing device (30) is a gassing star wheel for gassing the can lids (21).

8. Device (1) according to any of the preceding claims, **characterised in that** the downstream transport and/or processing device (30) is a machine for closing cans.

## Revendications

1. Dispositif (1) d'amenée de couvercles (21) à une sertisseuse de boîtes, comprenant une vis d'empilage (10) pour acheminer des couvercles (21) amenés par le biais d'une amenée de couvercles (16) et pour la transmission successive des couvercles (21) à un système de transport et/ou de traitement en aval (30), comprenant en outre un dispositif d'arrêt pour interrompre l'amenée des couvercles (21) au système de transport et/ou de traitement en aval (30) lors d'une interruption de production,
**caractérisé en ce que**
le dispositif d'arrêt est formé par la vis d'empilage (10), de sorte que l'acheminement de couvercles (21) est interrompu par l'arrêt de la vis d'empilage (10), dans lequel lors de l'interruption de production, le système de transport et de traitement en aval (30) continue à fonctionner.

2. Dispositif (1) selon la revendication 1, **caractérisé en ce que** la vis d'empilage (10) est actionnée indépendamment du système de transport et/ou de traitement en aval (30).

3. Dispositif (1) selon l'une quelconque des revendications précédentes, **caractérisé en ce que** la vis d'empilage (10) présente un entraînement séparé (12), de préférence un servomoteur, dans lequel l'entraînement séparé (12) peut fonctionner indépendamment de l'entraînement (31) du système de transport et/ou de traitement en aval (31).

4. Dispositif (1) selon la revendication 3, **caractérisé en ce que** l'entraînement (12) de la vis d'empilage (10) peut être synchronisé avec l'entraînement (31) du système de transport et/ou de traitement en aval (30).

5. Dispositif (1) selon la revendication 4, **caractérisé en ce que** l'entraînement (12) de la vis d'empilage (10) est synchronisé avec l'entraînement (31) du système de transport et/ou de traitement (30) en aval par le biais d'un couplage informatique, de préférence par Drive-PLC.

6. Dispositif (1) selon la revendication 1, **caractérisé en ce que** la vis d'empilage (10) est couplée mécaniquement avec le système de transport et/ou de traitement en aval (30) et est entraînée par le biais de l'entraînement (31) du système de transport et/ou de traitement en aval (30), dans lequel la vis d'empilage (10) peut être découplée lors d'une interruption de production du système de transport et/ou de traitement en aval (30).

7. Dispositif (1) selon l'une quelconque des revendications précédentes, **caractérisé en ce que** le système de transport et/ou de traitement en aval (30) est une étoile d'injection de gaz pour l'injection de gaz aux couvercles de boîte (21).

8. Dispositif (1) selon l'une quelconque des revendications précédentes, **caractérisé en ce que** le système de transport et/ou de traitement en aval (30) est une sertisseuse de boîtes.
